# EUROPÄISCHE PATENTANMELDUNG

(11) **EP 0 841 543 A1**
(43) Veröffentlichungstag der Anmeldung: **13.05.1998**
(21) Anmeldenummer: 97118545.9
(22) Anmeldetag: 24.10.1997
(51) Int. Cl.: G01F 1/06, G01F 1/08

(54) **Wasserzähler**

(30) Priorität: 11.11.1996 DE 19646492
(71) Anmelder: Hilbert, Patrick, 68220 Hégenheim (FR); Wetter, Hans, 4057 Basel (CH)
(72) Erfinder: Hilbert, Patrick, 68220 Hégenheim (FR); Wetter, Hans, 4057 Basel (CH)
(74) Vertreter: Tetzner, Michael

(57) **Zusammenfassung**

Die Erfindung betrifft einen Wasserzähler mit einem Gehäuse, das eine Eintrittsöffnung, eine Austrittsöffnung und eine dazwischenliegende Meßkammer aufweist, wobei das Gehäuse ferner im Bereich der Meßkammer eine weitere, durch eine Abschlußplatte verschließbare Öffnung vorsieht. In der Meßkammer ist ein um einen Lagerzapfen drehbeweglich angeordnetes Flügelrad vorgesehen, wobei zur Abstützung des Flügelrades auf dem Lagerzapfen eine Kugel vorgesehen ist, die in Längsrichtung des Lagerzapfens lose zwischen Flügelrad und Lagerzapfen angeordnet ist. Das Flügelrad ist ferner in Längsrichtung des Lagerzapfens verschiebbar, wobei die Verschiebbarkeit des Flügelrades zum einen durch ein mit der Kugel in Kontakt kommendes Ende des Lagerzapfens und zum anderen durch die Abschlußplatte begrenzt wird.

## Beschreibung

Die Erfindung betrifft einen Wasserzähler gemäß dem Oberbegriff des Anspruches 1.

Wasserzähler bestehen üblicherweise aus einem Gehäuse mit einer Eintritts- und einer Austrittsöffnung sowie einer dazwischenliegenden Meßkammer. In dieser Meßkammer ist ein Flügelrad drehbeweglich gehaltert, wobei die Umdrehungen des Flügelrades, beispielsweise über eine Magnetkupplung auf ein Zählwerk übertragen werden.

Im Zählwerk wird die Anzahl der Umdrehungen des Flügelrades in Liter umgerechnet und angezeigt. Für eine exakte Anzeige ist es daher erforderlich, daß das Flügelrad möglichst reibungsarm in der Meßkammer gehaltert ist.

Aus der Praxis sind verschiedene Arten der Halterung des Flügelrades bekannt. So werden bei einer Ausführung zwei Kugeln am oberen und unteren Ende des Flügelrades im Bereich der Flügelradachse eingepreßt und in jeweils einer küvettenartigen Buchse am Gehäuse gehaltert. Diese Art der Halterung ist jedoch in der Herstellung sehr aufwending, da sehr enge Toleranzen eingehalten werden müssen.

Bei einem anderen bekannten Wasserzähler wird das Flügelrad drehbeweglich um einen Lagerzapfen gehaltert. Während das eine Ende des Lagerzapfens am Gehäuse befestigt ist, kommt das andere Ende mit einem im Flügelrad eingepreßten Lagerstein in Kontakt. Die Herstellung des Flügelrades mit eingepreßtem Lagerstein ist jedoch auch relativ aufwendig.

Der Erfindung liegt daher die Aufgabe zugrunde, den Wasserzähler gemäß dem Oberbegriff des Anspruches 1 dahingehend weiterzuentwickeln, daß sowohl die Herstellung vereinfacht als auch das Drehverhalten des Flügelrades verbessert wird.

Erfindungsgemäß wird diese Aufgabe durch das kennzeichnende Merkmal des Anspruches 1 gelöst, indem
- die Kugel lose zwischen Flügelrad und Lagerzapfen angeordnet ist,
- das Flügelrad in Längsrichtung des Lagerzapfens verschiebbar ist und
- die Verschiebbarkeit des Flügelrades in Längsrichtung des Lagerzapfens zum einen durch ein mit der Kugel in Kontakt kommendes Ende des Lagerzapfens und zum anderen durch die Abschlußplatte begrenzt wird.

In einem bevorzugten Ausführungsbeispiel weist die Abschlußplatte auf ihrer der Meßkammer zugewandten Seite rippenartig ausgebildete Staumittel auf, die in einem Bereich unterbrochen sind. Zur Justierung des Wasserzählers ist die Abschlußplatte verdrehbar am Gehäuse gehaltert.

Weitere Vorteile und Ausgestaltungen der Erfindung sind Gegenstand der Unteransprüche und werden im folgenden anhand der Beschreibung und der Zeichnung näher erläutert.

In der Zeichnung zeigen
- Fig.1: eine Schnittdarstellung eines erfindungsgemäßen Wasserzählers,
- Fig.2: eine Schnittdarstellung des Wasserzählers gemäß Fig.1 entlang der Linie II-II der Fig.3,
- Fig.3: eine Schnittdarstellung des Wasserzählers entlang der Linie III-III der Fig.1 und
- Fig.4: eine Darstellung der Durchflußmeßkurve.

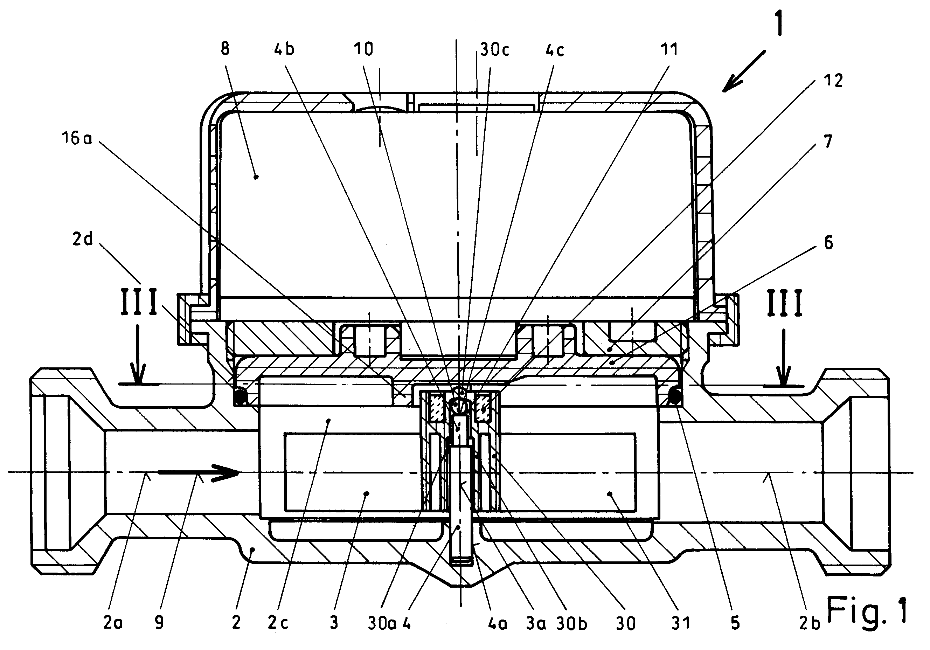

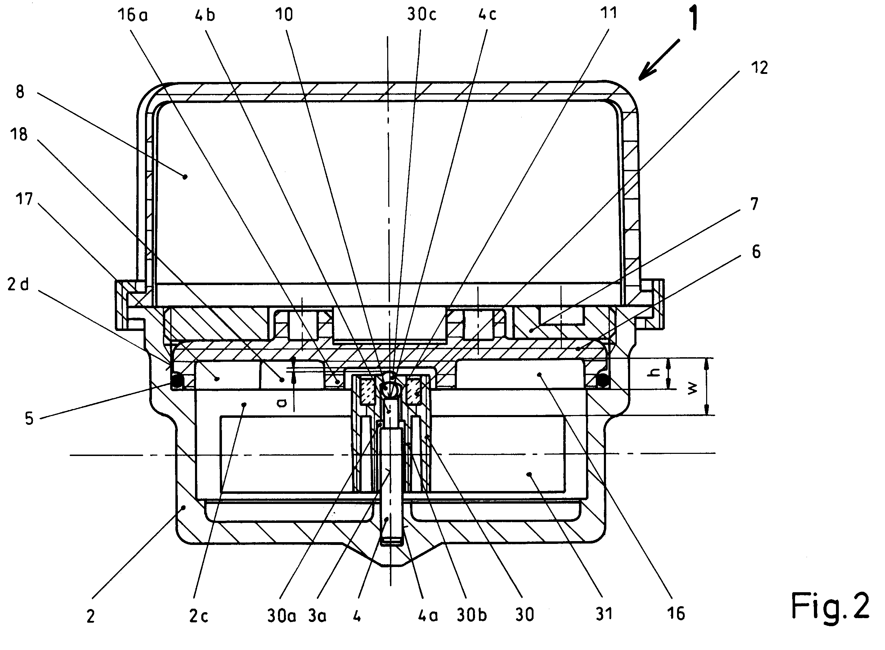

In den Fig.1 bis 3 ist ein erfindungsgemäßer Wasserzähler 1 in verschiedenen Schnittdarstellungen gezeigt. Er besteht im wesentlichen aus einem Gehäuse 2 mit einer Eintrittsöffnung 2a, einer Austrittsöffnung 2b und einer dazwischenliegenden Meßkammer 2c. In dieser Meßkammer 2c ist ein Flügelrad 3 drehbeweglich auf einem Lagerzapfen 4 angeordnet.

Zur Montage des Flügelrades weist das Gehäuse 2 im Bereich der Meßkammer 2c eine weitere Öffnung 2d auf, die über eine Abschlußplatte 6, eine O-Ringdichtung 5 und einen Verschlußring 7 verschließbar ist.

Im Bereich der Abschlußplatte 6 wird üblicherweise von außen ein Zählwerk 8 befestigt, in das die Umdrehungen des Flügelrades mittels einer Magnetkupplung in an sich bekannter Art und Weise übertragen werden.

Das Flügelrad 3 weist eine Drehachse 3a auf, die senkrecht zur Fließrichtung 9 der Flüssigkeit durch den Wasserzähler 1 ausgerichtet ist.

Die Halterung des Flügelrades 3 erfolgt im wesentlichen durch den Lagerzapfen 4, der mit seinem einen Ende 4a am Gehäuse, beispielsweise durch Preßsitz, befestigt ist.

Das Flügelrad 3 besteht im wesentlichen aus einem Mittelteil 30 und daran befestigten Flügeln 31. Sowohl der Mittelteil 30 als auch die Flügel 31 werden vorzugsweise als einstückiges Kunststoffspritzteil hergestellt.

Der Mittelteil 30 weist eine zentrale Sackbohrung 30a auf, die einen etwas größeren Innendurchmesser als der Außendurchmesser des Lagerzapfens 4 hat. Die Sackbohrung 30a wird durch eine Wandung 30b und einen Boden 30c begrenzt.

Bei der Montage des Flügelrades 3 wird dieses - bei geöffneter Abschlußplatte 6 - auf den festen Lagerzapfen 4 unter Zwischenfügung einer Kugel 10 aufgesteckt.

Diese Kugel 10 befindet sich dann, wie in Fig.1 gezeigt, in einem Hohlraum 11, der vom Boden 30c, einen Teil der Wandung 30b und der Stirnfläche 4c des anderen Endes 4b des Lagerzapfens 4 begrenzt wird.

Im dargestellten Ausführungsbeispiel ist die der Kugel 10 zugewandte Seite des Bodens 30c konkav gekrümmt, während die Stirnfläche 4c des Zapfens 4 flach ausgebildet ist.

Liegt das Flügelrad 3 mit seinem Boden 30c über die Kugel 10 auf dem Lagerzapfen 4 auf, so ist zwischen geschlossener Abschlußplatte 6 und dem Flügelrad 3 ein Abstand a vorhanden. Das Flügelrad ist um diesen Abstand a in Längsrichtung des Lagerzapfens 4, d.h. längs der Drehachse 3a entsprechend verschiebbar, wobei die Verschiebbarkeit auf der einen Seite dadurch begrenzt wird, daß das Flügelrad 3 über die Kugel 10 auf der Stirnfläche 4c des Lagerzapfens 4 aufliegt und auf der anderen Seite das Flügelrad 3 mit dem Gehäuse 2 bzw. der Abschlußplatte 6 in Kontakt kommt. Im Betrieb befindet sich das Flügelrad 3 entweder in einer der beiden Extremstellungen oder in einer Zwischenstellung.

Der Bereich des Flügelrades 3, der mit der Abschlußplatte 6 in der einen Extremstellung in Berührung kommt, ist im dargestellten Ausführungsbeispiel konvex gekrümmt ausgebildet, um möglichst geringe Reibkräfte zu verursachen.

Der Mittelteil 30 weist auf seinem der Abschlußplatte 6 zugewandten Teil einen Ringmagneten 12 auf, der konzentrisch um die Sackbohrung 30a angeordnet ist. Über diesem Ringmagneten 12 erfolgt die Übertragung der Umdrehungszahlen des Flügelrades 3 auf das Zählwerk 8.

Bei der Halterung des Flügelrades ist insbesondere auf eine möglichst reibungsarme Lagerung zu achten. Dies wird hier insbesondere dadurch erreicht, daß sich das Flügelrad 3 auf dem Lagerzapfen 4 über eine Kugel abstützt. Diese Kugel ist zudem lose im Hohlraum 11 angeordnet und kann insbesondere auch von der Flüssigkeit umspült werden.

Auch die zu verwendenden Materialien für die einzelnen Teile können die Reibkräfte erheblich reduzieren. Dabei hat es sich als besonders vorteilhaft erwiesen, wenn das Flügelrad 3 aus Kunststoff gefertigt wird, die Kugel 10 aus Glas oder Saphir besteht und der Zapfen 4 aus einer Bronzelegierung hergestellt wird. Auch die Abschlußplatte 6 besteht vorzugsweise aus Kunststoff, so daß in der einen Extremstellung, wenn das Flügelrad 3 mit der Abschlußplatte 6 in Kontakt kommt, zwei Kunststoffteile in Berührung stehen.

Der Zapfen 4 ist an seinem oberen Ende 4b im Durchmesser etwas reduziert. Diese Maßnahme ist jedoch nicht zwingend erforderlich, ermöglicht jedoch hier eine bessere Unterbringung des Ringmagneten 12, ohne dabei den Mittelteil 30 im Durchmesser unnötig zu vergrößern.

Im Betrieb wird sich das Flügelrad 3 bei geringen Umdrehungszahlen über die Kugel 10 auf dem Lagerzapfen 4 abstützen. Bei mittleren Drehzahlen verschiebt sich das Flügelrad 3 längs des Lagerzapfens 4, wodurch die Reibkräfte zwischen Flügelrad und Kugel im wesentlichen aufgehoben werden. Bei sehr hohen Drehzahlen kommt das Flügelrad 3 schließlich mit der Abschlußplatte 6 in Kontakt.

Bei den der Erfindung zugrundeliegenden Versuchen hat sich gezeigt, daß sich mit dem erfindungsgemäßen Wasserzähler eine tiefere Anlaufgrenze und eine bessere Langzeitstabilität gegenüber den bekannten Wasserzählern erreichen läßt.

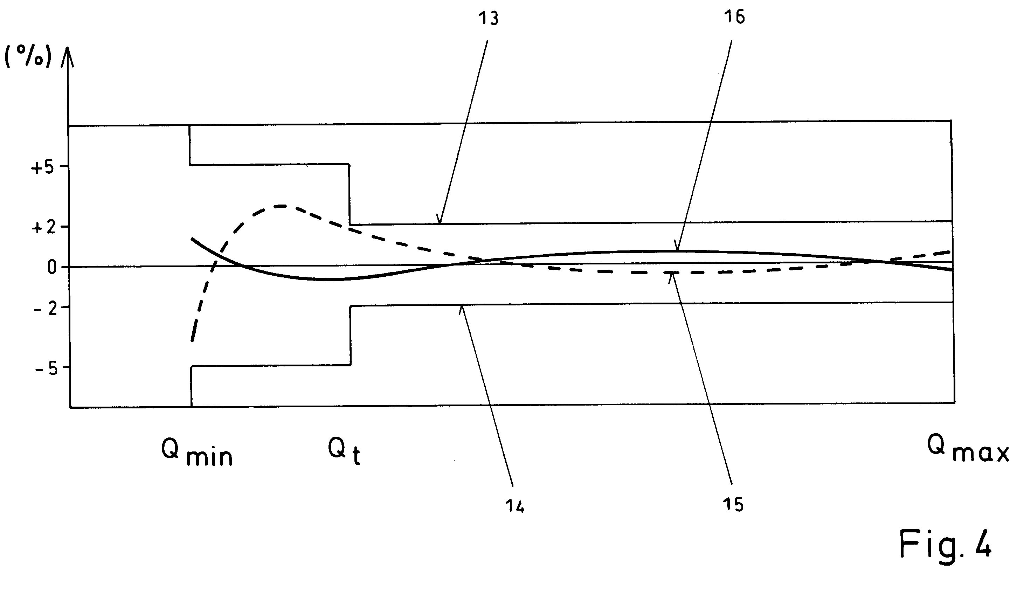

Wasserzähler müssen eine vom Durchfluß abhängige Meßkurve aufweisen, die innerhalb eines Toleranzbereiches liegt. Fig.4 zeigt die obere und eine untere Toleranzgrenze 13, 14 gegenüber der Durchflußmenge Q aufgetragen. Zwischen dem minimalen Durchfluß Qₘᵢₙ und maximalen Durchfluß Qₘₐₓ liegt bei Qₜ eine Trenngrenze, bei der üblicherweise der Übergang von laminarer zu turbulenter Strömung innerhalb des Wasserzählers stattfindet. Dabei wird bei einer Durchflußmenge kleiner als Qₜ eine größere Toleranz der Meßkurve als bei der Durchflußmenge größer Qₜ gewährt.

Bei einem Wasserzähler mit einer Nennweite NW 15 und einer maximalen Durchflußmenge Qₘₐₓ = 3 m³/h beträgt die Toleranz im Bereich zwischen Qₘᵢₙ und Qₜ +/- 5% und im Bereich zwischen Qₜ und Qₘₐₓ +/- 2%.

Es wird gefordert, daß die Meßkurve des Wasserzählers im Bereich zwischen Qₘᵢₙ und Qₘₐₓ zwischen den beiden Toleranzgrenzen 13, 14 liegt. Mit gestrichelter Linie ist eine Meßkurve 15 für einen herkömmlichen Wasserzähler eingezeichnet. Man bemerkt hierbei, daß gerade im Bereich zwischen Qₘᵢₙ und Qₜ eine verhältnismäßig große Abweichung vorhanden ist, wenngleich diese noch innerhalb der Toleranzgrenzen liegt.

Jeder neu hergestellte Wasserzähler muß vor der Benutzung einjustiert werden, um eine gegebenenfalls außerhalb der Toleranzgrenzen 13, 14 liegende Meßkurve in den zulässigen Bereich zu verschieben.

Zu diesem Zweck weist die Abschlußplatte 6 auf ihrer der Meßkammer 2c zugewandten Seite rippenartig ausgebildete Staumittel auf. Üblicherweise sind diese Staumittel als Querrippen bzw. als Kreuzrippen ausgebildet.

Die Abschlußplatte ist rund ausgebildet und verdrehbar am Gehäuse gehaltert. Durch eine Verdrehung der Abschlußplatte ändert sich auch der Winkel der rippenartig ausgebildeten Staumittel in bezug auf die Strömungsrichtung und bewirkt somit eine Veränderung der Strömungsverhältnisse in der Meßkammer.

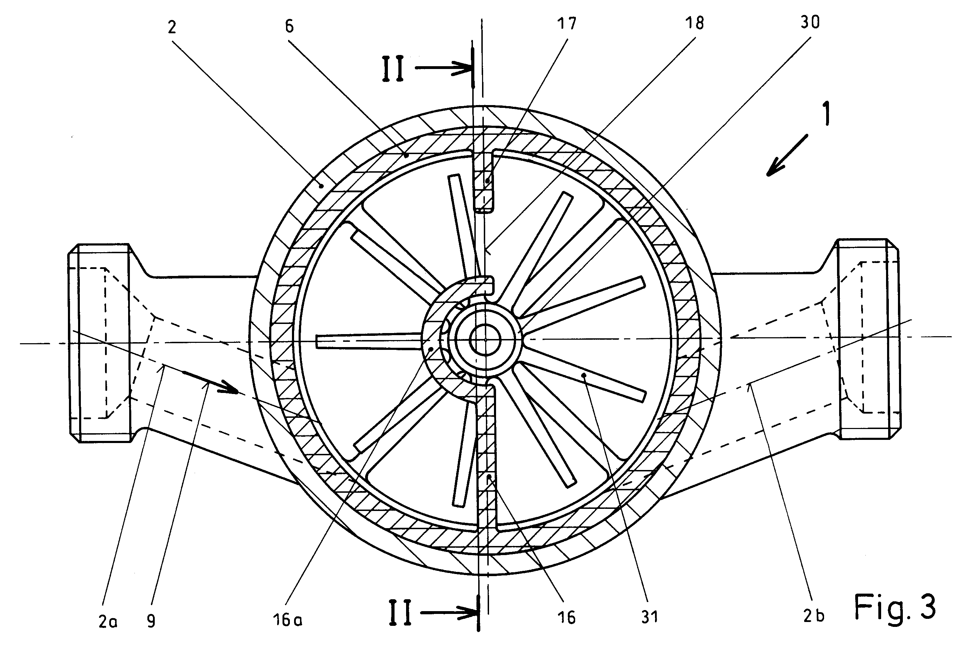

Die rippenartig ausgebildeten Staumittel im dargestellten Ausführungsbeispiel sind insbesondere in Fig.3 ersichtlich. Sie bestehen aus einer ersten Staurippe 16a, die sich vom äußeren Umfang der Abschlußplatte radial zur Mitte der Abschlußplatte erstreckt und dort in einen halbbogenförmigen Teil 16a übergeht, der um die Mitte der Abschlußplatte 6 ausgebildet ist.

Der der Abschlußplatte 6 zugewandte obere Teil des Flügelrades 3 wird vom halbbogenförmigen Teil 16a der ersten Staurippe 16 teilweise umgeben, wobei der halbbogenförmige Teil 16a auf der der Eintrittsöffnung 2a zugewandten Seite angeordnet ist. Beim Stand der Technik wird dieser obere Teil des Flügelrades üblicherweise vollständig von der Rippe umgeben. Dies hat jedoch den Nachteil, daß sich zwischen Rippe und Flügelrad Luftblasen sammeln, die einen unerwünschten Einfluß auf das Drehverhalten des Flügelrades ausüben. Erfindungsgemäß ist der Teil der Staurippe im Bereich des Flügelrades jedoch nur halbbogenförmig ausgebildet, wobei der offene Teil in Richtung der Austrittsöffnung 2b weist. Auf diese Weise können entstehende Luftblasen sofort abgeführt werden.

Im dargestellten Ausführungsbeispiel erstreckt sich in Verlängerung der ersten Staurippe 16 eine zweite Staurippe 17 vom gegenüberliegenden äußeren Umfang radial zur Mitte, wobei zwischen erster und zweiter Staurippe 16, 17 ein Freiraum 18 verbleibt. Die rippenartig ausgebildten Staumittel 16, 17 sind somit in einem Bereich (Freiraum 18) unterbrochen.

Die Höhe h der rippenartigen Staumittel 16, 17 entspricht etwa der Hälfte des lichten Abstands w zwischen den Flügeln 31 des Flügelrades 3 und der Abschlußplatte 6.

Die besondere Ausgestaltung der Staumittel ermöglicht nicht nur eine Reduzierung der Fehlertoleranzen, sondern vor allem auch eine Linearisierung der Meßkurve für den gesamten Durchflußmengenbereich. In Fig.4 ist eine Meßkurve 16 eingezeichnet, die mit dem Wasserzähler 1 gemäß den Fig.1 bis 3 erzielbar ist.

## Patentansprüche

1. Wasserzähler (1; 1') mit
- einem Gehäuse (2), das eine Eintrittsöffnung (2a), eine Austrittsöffnung (2b) und eine dazwischenliegende Meßkammer (2c) aufweist, wobei das Gehäuse ferner im Bereich der Meßkammer eine weitere, durch eine Abschlußplatte (6) verschließbare Öffnung (2d) aufweist,
- sowie mit einem in der Meßkammer (2c) angeordneten und um einen Lagerzapfen (4) drehbeweglichen Flügelrad (3; 3'),
- wobei zur Abstützung des Flügelrades (3; 3') auf dem Lagerzapfen (4) eine Kugel (10, 10') vorgesehen ist, die in Längsrichtung des Lagerzapfens zwischen Flügelrad und Lagerzapfen angeordnet ist.
dadurch gekennzeichnet, daß
- die Kugel (10) lose zwischen Flügelrad (3) und Lagerzapfen (4) angeordnet ist,
- das Flügelrad (3; 3') in Längsrichtung des Lagerzapfens (4) verschiebbar ist und
- die Verschiebbarkeit des Flügelrades (3; 3') in Längsrichtung des Lagerzapfens (4) zum einen durch ein mit der Kugel (10; 10') in Kontakt kommendes Ende (4b) des Lagerzapfens (4) und zum anderen durch die Abschlußplatte (6) begrenzt wird.

2. Wasserzähler nach Anspruch 1, dadurch gekennzeichnet, daß der Lagerzapfen (4) mit seinem der Kugel (10; 10') abgewandten Ende (4a) im Gehäuse (2) befestigt ist.

3. Wasserzähler nach Anspruch 1, dadurch gekennzeichnet, daß das Flügelrad (3) einen Mittelteil (30) mit einer Sackbohrung (30a) aufweist, in die der Lagerzapfen (4) eingeführt ist, wobei die Sackbohrung (30a) einen Boden (30c) sowie eine Wandung (30b) aufweist und der Boden (30c), ein hieran angrenzender Teil der Wandung (30b) und das mit der Kugel (10) in Kontakt kommende Ende des Lagerzapfens (4) einen Hohlraum (11) begrenzen, in dem die Kugel (10) vorgesehen ist.

4. Wasserzäher nach Anspruch 3, dadurch gekennzeichnet, daß die der Kugel (10) zugewandte Seite des Bodens (30c) konkav gekrümmt ist.

5. Wasserzähler nach Anspruch 1, dadurch gekennzeichnet, daß der mit der Abschlußplatte (6) in Kontakt kommende Bereich des Flügelrades (3) konvex gekrümmt ist.

6. Wasserzähler nach Anspruch 1, dadurch gekennzeichnet, daß zumindest die miteinander in Kontakt kommenden Bereiche des Flügelrades (3) und der Abschlußplatte (6) aus Kunststoff gefertigt sind.

7. Wasserzähler nach Anspruch 1, dadurch gekennzeichnet, daß am Gehäuse (2) ein Zählwerk (8) angeordnet ist, das über eine Magnetkupplung Zählimpulse entsprechend den Umdrehungen des Flügelrades (3) erhält.

8. Wasserzähler nach Anspruch 1, dadurch gekennzeichnet, daß die Abschlußplatte (6) auf ihrer der Meßkammer (2c) zugewandten Seite rippenartig ausgebildete Staumittel aufweist.

9. Wasserzähler nach Anspruch 1, dadurch gekennzeichnet, daß die Abschlußplatte (6) zur Justierung des Wasserzählers (1) verdrehbar am Gehäuse (2) gehaltert wird.

10. Wasserzähler nach Anspruch 8, dadurch gekennzeichnet, daß die rippenartig ausgebildeten Staumittel in einem Bereich (Freiraum 18) unterbrochen sind.

11. Wasserzähler nach Anspruch 1, dadurch gekennzeichnet, daß die Abschlußplatte (6) rund ausgebildet ist und auf der der Meßkammer (2c) zugewandten Seite eine erste Staurippe (16) aufweist, die sich vom äußeren Umfang der Abschlußplatte radial zur Mitte der Abschlußplatte erstreckt und dort halbbogenförmig um die Mitte ausgebildet ist.

12. Wasserzähler nach Anspruch 11, dadurch gekennzeichnet, daß sich in Verlängerung der ersten Staurippe (16) eine zweite Staurippe (17) vom gegenüberliegenden äußeren Umfang radial zur Mitte erstreckt, wobei zwischen erster und zweiter Staurippe (16, 17) ein Freiraum (18) verbleibt.

13. Wasserzähler nach Anspruch 11, dadurch gekennzeichnet, daß der der Abschlußplatte zugewandte obere Teil des Flügelrades (3) vom halbbogenförmigen Teil (16a) der ersten Staurippe (16) teilweise umgeben wird, wobei der halbbogenförmige Teil (16a) auf der der Eintrittsöffnung (2a) zugewandten Seite angeordnet ist.

14. Wasserzähler nach Anspruch 8, dadurch gekennzeichnet, daS die Höhe (h) der rippenartigen Staumittel etwa der Hälfte des lichten Abstands (w) zwischen den Flügeln (31) des Flügelrades (3) und der Abschlußplatte (6) entspricht.
